# EUROPEAN PATENT APPLICATION

(11) **EP 4 770 029 A1**
(43) Date of publication of application: **01.07.2026**
(21) Application number: 24954198.8
(22) Date of filing: 21.10.2024
(51) Int. Cl.: H04L 41/0806, H02J 13/00, H04L 67/141

(54) **DEVICE MANAGEMENT METHOD AND APPARATUS, DEVICE, AND STORAGE MEDIUM**

(30) Priority: 10.09.2024 CN 202411266089
(71) Applicant: Suzhou Qiancheng New Energy Technology Co., Ltd., Suzhou, Jiangsu 215101 (CN)
(72) Inventor: DING, Jiajie, Suzhou, Jiangsu 215101 (CN); TIAN, Kang, Suzhou, Jiangsu 215101 (CN); YANG, Xinghua, Suzhou, Jiangsu 215101 (CN); FANG, Lunqing, Suzhou, Jiangsu 215101 (CN); XIAO, Liujie, Suzhou, Jiangsu 215101 (CN)
(74) Representative: Bayramoglu et al.
(86) International application number: PCT/CN2024/126130
(87) International publication number: WO 2026/056052

(57) **Abstract**

This application provides a device management method and apparatus, a device, and a storage medium, and relates to the field of software engineering technologies, so as to automatically identify and enable a corresponding function after a device is connected, thereby achieving plug-and-play of the connected device. The method includes: When detecting that a device is connected to any of its port, an inverter identifies a device type of the connected device, and establishes a communication connection with the connected device when the identification of the device type of the connected device succeeds. Further, the inverter activates the functions corresponding to the device type of the connected device.

## Description

This application claims priority to Chinese Patent Application No. 2024112660896, filed with the China National Intellectual Property Administration on September 10, 2024, entitled "DEVICE MANAGEMENT METHOD AND APPARATUS, DEVICE, AND STORAGE MEDIUM", the entire contents of which are incorporated herein by reference.

### TECHNICAL FIELD

This application relates to the field of software engineering technologies, and in particular, to a device management method and apparatus, a device, and a storage medium.

### BACKGROUND TECHNOLOGY

With rapid development of the photovoltaic field, there are more types of connectable devices that cooperate with a photovoltaic system. The connectable devices may be connected to the photovoltaic system by using an inverter, so as to implement data exchange and energy transmission.

For example, a display device is connected to the photovoltaic system so that running information of the photovoltaic system can be displayed by using the display device. A charging pile is connected to the photovoltaic system so that electric energy generated during running of the photovoltaic system can be used to complete charging of another device (such as a vehicle) by using the charging pile. An alarm device is connected to the photovoltaic system so that an alarm or the like is given based on a specified alarm rule when the photovoltaic system is abnormal.

In a related technology, after a device is connected to the photovoltaic system, operation and maintenance personnel need to perform setting for the device before implementing a corresponding function, which is time-consuming and labor-intensive.

### TECHNICAL PROBLEMS

An objective of embodiments of this application is to provide a device management method and apparatus, a device, and a storage medium.

### TECHNICAL SOLUTIONS

The technical solutions used in embodiments of this application are as follows:
According to a first aspect, a device management method is provided. The method includes: When detecting that a device is connected to a port, an inverter identifies a device type of the connected device, and establishes a communication connection to the connected device when the identification of the device type of the connected device succeeds. Further, the inverter activates a function corresponding to the device type of the connected device.

In an embodiment, when detecting that a device is removed from the port, the inverter determines the removed device; and breaks a communication connection from the removed device, and disables a function corresponding to the removed device.

In an embodiment, that an inverter identifies a device type of the connected device includes: The inverter sends a plurality of test signals to the connected device, where the plurality of test signals include test signals corresponding to different device types; and receives a response message returned by the connected device, and determines the device type of the connected device based on a test signal corresponding to the response message.

In an embodiment, when no response message is received within a preset time period after the plurality of test signals are sent, the inverter generates and sends an abnormality report, where the abnormality report includes the port to which the connected device is connected.

In an embodiment, that an inverter identifies a device type of the connected device includes: The inverter sends a type request message to the connected device, and receives a device type returned by the connected device in response to the type request message.

According to a second aspect, a device management apparatus is provided, including a port detection unit and a processing unit. The port detection unit is configured to: when it is detected that a device is connected to a port, identify a device type of the connected device. The processing unit is configured to: when the identification of the device type of the connected device succeeds, establish a communication connection to the connected device. The processing unit is further configured to activate a function corresponding to the device type of the connected device.

According to a third aspect, an inverter is provided, where the inverter includes a memory and a processor; the memory is coupled to the processor; the memory is configured to store computer program code, where the computer program code includes computer instructions; and when the processor executes the computer instructions, the inverter performs the device management method according to the first aspect or any possible design thereof.

According to a fourth aspect, a computer-readable storage medium is provided, where the computer-readable storage medium stores instructions, and when the instructions are run on an inverter, the inverter is enabled to perform the device management method according to the first aspect or any possible implementation thereof.

According to a fifth aspect, a computer program product including instructions is provided, where when the computer program product runs on a computer, the computer is enabled to perform the device management method according to the first aspect or any possible implementation thereof.

According to a sixth aspect, a chip system is provided, including a processor and an interface circuit, where the interface circuit is configured to receive a computer program or instructions and transmit the computer program or the instructions to the processor; and the processor is configured to execute the computer program or the instructions, to enable the chip system to perform the device management method according to the first aspect or any possible implementation thereof.

### BENEFICIAL EFFECTS

A beneficial effect of a method provided in an embodiment of this application is as follows: When detecting that a device is connected to any of its port, an inverter can automatically identify the connected device, and upon successful matching, establish a communication connection with the connected device, so that the inverter and the connected device form an integrated system. This allows information to be transmitted to the connected device via the inverter, and automatically activates the functions corresponding to the device type of the connected device, thereby achieving plug-and-play of the connected device.

### DESCRIPTION OF THE DRAWINGS

FIG. 1 is a schematic diagram of a structure of a device management system according to an embodiment of this application;
FIG. 2 is a schematic diagram of a structure of an inverter according to an embodiment of this application;
FIG. 3 is a schematic flowchart of a device management method according to an embodiment of this application;
FIG. 4 is a schematic diagram of connection between an inverter and a connectable device according to an embodiment of this application;
FIG. 5 is a schematic flowchart of another device management method according to an embodiment of this application;
FIG. 6 is a schematic flowchart of another device management method according to an embodiment of this application;
FIG. 7 is a schematic diagram of a structure of a device management apparatus according to an embodiment of this application;
FIG. 8 is a schematic diagram of a structure of another device management apparatus according to an embodiment of this application; and
FIG. 9 is a schematic diagram of a structure of a device management device according to an embodiment of this application.

### IMPLEMENTATIONS OF THE PRESENT INVENTION

The following describes the technical solutions in the embodiments of this application with reference to the accompanying drawings in the embodiments of this application.

In the embodiments of this application, words such as "example" or "for example" are used to represent giving an example, an illustration, or a description. Any embodiment or design solution described by using "example" or "for example" in the embodiments of this application should not be interpreted as being more preferred or having more advantages than another embodiment or design solution. Exactly, use of the words such as "example" or "for example" is intended to present related concepts in a specific manner.

In description of this application, unless otherwise specified, "/" means "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, "at least one" means one or more, and "a plurality of" means two or more. The words such as "first" and "second" do not limit a quantity or an execution order, and the words such as "first" and "second" do not necessarily indicate a difference.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that in the embodiments of this application, sequence numbers of the processes do not mean an execution sequence. The execution sequence of the processes should be determined based on functions and internal logic of the processes, and should not be construed as any limitation on the implementation processes of the embodiments of this application.

It may be understood that, in this application, "when..." and "if" refer to the corresponding processing in an objective situation, which is not a time limit, and does not require that a determining action is required during implementation, and does not mean that other restrictions exist.

It may be understood that some optional features in the embodiments of this application may not depend on another feature in some scenarios, for example, a solution on which the feature is currently based, may be independently implemented to resolve a corresponding technical problem and achieve a corresponding effect, or may be combined with another feature in some scenarios according to a requirement. Correspondingly, the apparatus provided in the embodiments of this application may also correspondingly implement these features or functions. Details are not described herein.

In this application, unless otherwise specified, a same or similar part of the embodiments may be mutually referenced. In the embodiments of this application and the implementation methods in the embodiments, if no special description or logical conflict exists, terms and/or descriptions between different embodiments and between implementation methods in the embodiments are consistent and may be mutually referenced. Technical features in different embodiments and the implementation methods in the embodiments may be combined to form a new embodiment, implementation, or implementation method according to an internal logical relationship thereof. The following implementations of this application do not constitute a limitation on the protection scope of this application.

Currently, with rapid development of the photovoltaic field, there are more types of connectable devices that cooperate with a photovoltaic system. The connectable devices may be connected to the photovoltaic system by using an inverter, so as to implement data exchange and energy transmission. In a related technology, after a device is connected to the photovoltaic system, operation and maintenance personnel need to perform setting for the device before implementing a corresponding function, which is time-consuming and labor-intensive.

To resolve the foregoing problem, this application provides a device management method and apparatus, a device, and a storage medium. The device management method is applied to an inverter. The method includes: When detecting that a device is connected to any of its port, an inverter identifies a device type of the connected device, and establishes a communication connection with the connected device when the identification of the device type of the connected device succeeds. Further, the inverter activates the functions corresponding to the device type of the connected device.

In this way, when detecting that a device is connected to any of its port, an inverter can automatically identify the connected device, and upon successful matching, establish a communication connection with the connected device, so that the inverter and the connected device form an integrated system. This allows information to be transmitted to the connected device via the inverter, and automatically activates the functions corresponding to the device type of the connected device, thereby achieving plug-and-play of the connected device.

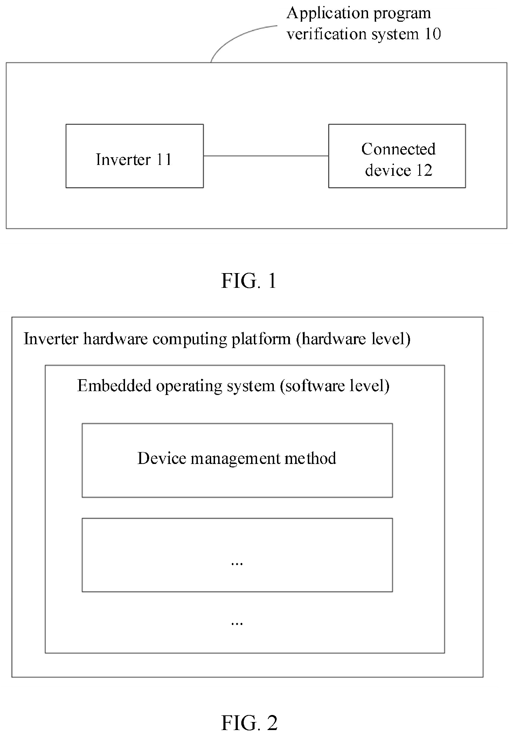

FIG. 1 shows a device management system. The device management method provided in this embodiment of this application is applicable to the device management system shown in FIG. 1, and is configured to achieve plug-and-play of a device connected to an inverter, thereby facilitating a user operation. As shown in FIG. 1, the device management system 10 includes an inverter 11 and a connected device 12.

Hardware connection between the inverter 11 and the connected device 12 is implemented by using a connection line. The inverter 11 includes a plurality of ports that are used to connect other devices. The connected device 12 may include, for example, a cloud communication box, a battery pack, a smart junction box(Inverter Smart Panel), a light-emitting diode (light-emitting diode, LED) display lamp, a liquid crystal display (Liquid Crystal Display, LCD), and a smart meter.

It should be noted that a connection form of hardware connection between the inverter 11 and the connected device 12 is not specifically limited in this embodiment of this application, for example, a port type, a port quantity, a port communication quantity, and a port form of the inverter.

In the device management system 10 shown in FIG. 1, the inverter 11 may detect a port included in the inverter 11 to determine whether a device is connected or removed.

The inverter 11 may further identify the connected device 12 by using a port, to determine a device type of the connected device.

Further, the inverter 11 may further establish a communication connection with the connected device 12 by using a port, to form an integrated system with the connected device 12.

The inverter 11 may further activate a function corresponding to the device type of the connected device 12, to achieve plug-and-play of the connected device 12.

In some embodiments, as shown in FIG. 2, the device management method provided in this application may be applied to an embedded operating system that uses an inverter as a hardware computing platform, and can cooperate with a communication system (communication system, CMS), an energy management system (energy management system, EMS), or the like in the device system.

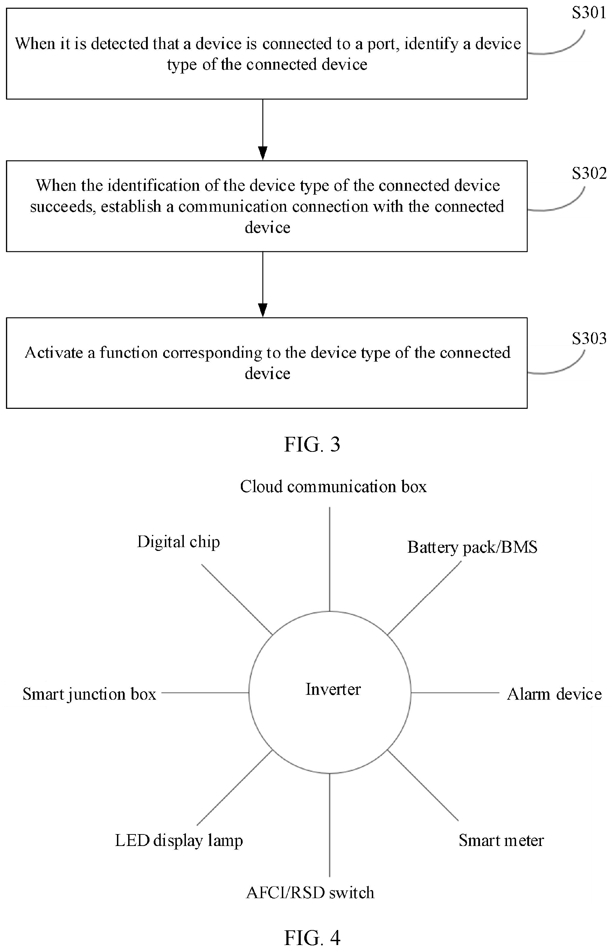

FIG. 3 is a schematic flowchart of a device management method according to some example embodiments. In some embodiments, the foregoing device management method may be applied to the inverter 11 in the device management system 10 shown in FIG. 1. The following describes the foregoing device management method by using an example in which the device management method is applied to the inverter 11 in the embodiments of this application.

As shown in FIG. 3, the device management method provided in the embodiments of this application includes S301-S303 below.

S301: When detecting that a device is connected to a port, an inverter identifies a device type of the connected device.

In a possible implementation, the inverter detects a plurality of ports in real time, and determines, by using a port power supply and/or a port contact, whether a device is connected. Further, when detecting that a device is connected to a port, the inverter identifies a device type of the connected device by using the port.

In some embodiments, the inverter determines, by using the port power supply, whether a device is connected. For example, by detecting whether there is a voltage output change or a voltage input change for each port, the inverter may determine whether a device is connected.

The inverter determines, by using the port contact, whether a device is connected. For example, based on a voltage change and a current change of the port contact, the inverter may determine whether a device is connected.

When detecting that a device is connected to a port, the inverter identifies a device type of the connected device by using the port. For example, the inverter may send a plurality of test signals to the connected device.

The plurality of test signals include test signals corresponding to different device types.

It should be noted that devices of different device types are configured with test signals that are used to make a response. The foregoing plurality of test signals sent by the inverter to the connected device may be set in the inverter by operation and maintenance personnel of the device management system based on a type of a device that is connectable to the inverter. For example, as shown in FIG. 4, a type of a device that is connectable to the inverter includes a cloud communication box, a battery pack/BMS, an alarm device, a smart meter, a digital chip, a smart junction box, an LED display lamp, and a direct current arc-fault detection AFCI/module-level shutdown RSD switch. This is not specifically limited in this embodiment of this application.

After receiving a test message corresponding to the device type of the connected device, the connected device returns a response message to the inverter.

Correspondingly, the inverter receives the response message sent by the connected device, and determines the device type of the connected device based on a test signal corresponding to the response message.

For example, in an example in which the connected device that is connectable to the inverter is a cloud communication box, a battery pack, a smart junction box, an LED display lamp, an LCD display, a smart meter, or the like, test signals respectively corresponding to the devices are shown in Table 1 below.

**Table 1: Mapping relationship table between a device type and a test signal**

| Device type | Test signal |
|---|---|
| Cloud communication box(Dongle) | Signal 1 |
| Battery | Signal 2 |
| Smart junction box | Signal 3 |
| LED display lamp | Signal 4 |
| LCD display | Signal 5 |
| Smart meter | Signal 6 |

Based on the mapping relationship table shown in Table 1, the inverter sends signals 1 to 6 to the connected device at an interval of preset duration by using a port. If the inverter receives a response message returned by the connected device within preset duration after the signal 1 is sent, the inverter stops sending the signals 2 to 6, and determines that the device type of the connected device is a cloud communication box. If the inverter receives a response message returned by the connected device within preset duration after the signal 2 is sent, the inverter stops sending the signals 3 to 6, and determines that the type of the connected device is a battery pack. By analogy, if the inverter receives a response message returned by the connected device within preset duration after the signal 6 is sent, the inverter determines that the connected device is a smart meter.

In some embodiments, if no response message is received within preset duration after the inverter finishes sending a plurality of test signals, the inverter determines that the current connected device cannot be identified, and generates and sends an abnormality report, where the abnormality report includes a port to which the connected device is connected.

It should be noted that the inverter may display the abnormality report by using a connected display, so as to send the abnormality report to the user, or send the abnormality report to a terminal of the user by using a connected communication module. This is not specifically limited in this embodiment of this application.

In some embodiments, when detecting that a device is connected to a port, the inverter identifies a device type of the connected device by using the port. For example, the inverter may alternatively send a type request message to the connected device, and receive a device type returned by the connected device in response to the type request message.

It should be noted that, if the device type that is received by the inverter and that is returned by the connected device in response to the type request message is an illegible character that cannot be identified, the inverter determines that the connected device cannot be identified, and generates and sends an abnormality report.

S302: When the identification of the device type of the connected device succeeds, the inverter establishes a communication connection with the connected device.

In a possible implementation, the inverter determines, based on the identification of the device type of the connected device in step S301, whether the identification succeeds. Further, when the identification of the device type of the connected device succeeds, the inverter establishes a communication connection with the connected device, so that the connected device and the inverter form an integrated system.

In some embodiments, after the inverter establishes the communication connection with the connected device, running data and/or a control instruction sent by the connected device may be forwarded by the inverter to another device. Running data and/or a control instruction sent by the another device to the connected device may also be forwarded by the inverter to the connected device. Various devices are integrated by using the inverter.

It should be noted that after the inverter establishes the communication connection with the connected device, the inverter may send device running information, associated with a system function, of the connected device to different systems or read the device running information from different systems by using a port. For example, data that requires energy control is sent to an EMS energy management system, and data such as a SOC of a battery needs to be read from a BMS battery management system.

In some embodiments, a first device and a second device are separately connected to the inverter. The inverter receives a target message sent by the first device, and forwards the target message to the second device. The target message includes running data and/or a control instruction.

During data exchange between the inverter and the connected device, real-time running data and a control instruction may be packaged and sent together, thereby avoiding a delay in a data field of a same device. For example, a charging pile needs to obtain a current voltage, and needs to obtain a power limiting instruction provided by the inverter. Integrated packaging and sending ensure that data of the two data types is simultaneously obtained, avoiding a problem that only the power limiting instruction is received and the voltage cannot be obtained. If a delay occurs in obtaining the voltage, a voltage is required to determine a current for an output power, which may cause a serious safety problem or even a system fault.

In some embodiments, a message between the inverter and the connected device is encrypted based on a global digital encryption algorithm, thereby ensuring data security between the inverter and another connected device.

S303: The inverter activates a function corresponding to the device type of the connected device.

In a possible implementation, after establishing the communication connection with the connected device, the inverter controls, based on the device type of the connected device, a function code field corresponding to the device type to be enabled, so as to automatically enable a function of the connected device after the connected device is connected to the inverter.

It may be understood that in the device management method provided in this application, when detecting that a device is connected to any of its port, an inverter can automatically identify the connected device, and upon successful matching, establish a communication connection with the connected device, so that the inverter and the connected device form an integrated system. This allows information to be transmitted to the connected device via the inverter, and automatically activates the functions corresponding to the device type of the connected device, thereby achieving plug-and-play of the connected device.

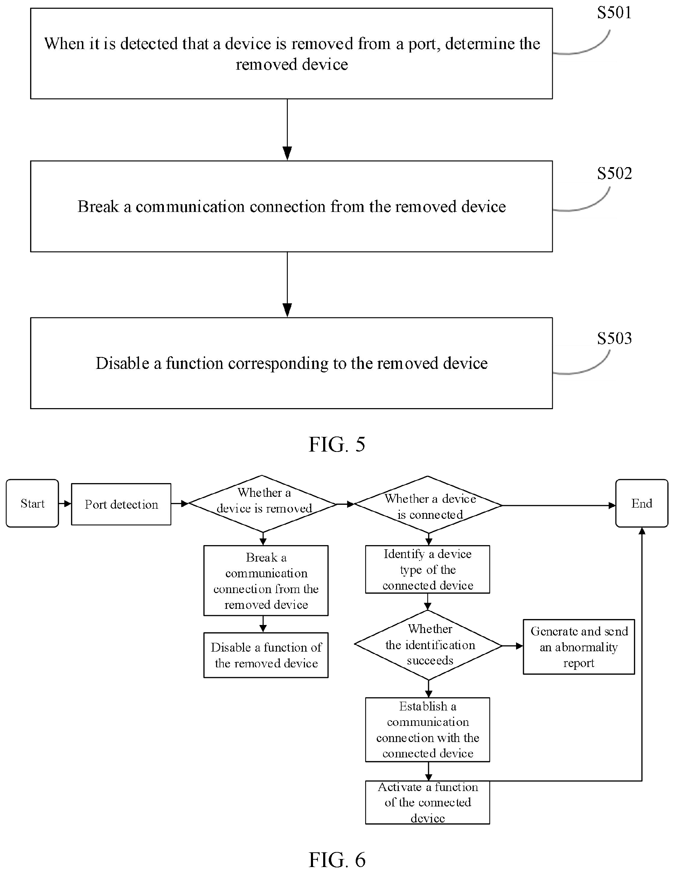

In a design, when a device connected to the inverter is removed, to ensure normal running of the system, the device management method provided in this application further includes S501-S503, as shown in FIG. 5.

S501: When detecting that a device is removed from a port, the inverter determines the removed device.

In a possible implementation, the inverter detects a plurality of ports in real time, and determines, by using a port power supply and/or a port contact, whether a device is removed. Further, when detecting that a device is removed from a port, the inverter determines the removed device based on a historical connection result of the port.

In some embodiments, after the connected device is connected to the inverter by using the port, the inverter establishes and stores a mapping relationship between the port and the connected device. After detecting that a device is removed from the port, the inverter determines the removed device based on the stored mapping relationship.

For example, a mapping relationship table between a port and a connected device is shown in Table 2 below.

**Table 2: Mapping relationship table between a port and a connected device**

| Port | Connected device |
|---|---|
| Port 1 | LED display lamp |
| Port 2 | / |
| Port 3 | / |
| Port 4 | LCD display |
| Port 5 | Smart junction box |
| Port 6 | / |

For example, if the inverter detects that the device at the port 5 is removed, the inverter determines, based on the mapping relationship shown in Table 2, that the removed device is a smart junction box.

S502: The inverter breaks a communication connection from the removed device.

S503: The inverter activates a function corresponding to the removed device.

In a possible implementation, the inverter disables a function code field corresponding to the removed device, and stops invoking a function of the removed device, thereby avoiding a case that after the removed device is removed, another device still invokes a corresponding function, causing an abnormality.

It should be noted that in this embodiment of this application, an execution sequence of step S502 and step S503 is not specifically limited. Step S502 may be performed first or step S503 may be performed first. Alternatively, steps S502 and S503 may be performed simultaneously.

In a design, FIG. 6 is a schematic flowchart of a device management method. First, the inverter performs port detection to determine whether a device is removed or connected.

Further, if the inverter determines that a device is removed, the inverter breaks a communication connection from the removed device, and disables a function of the removed device.

If the inverter determines that a device is connected, the inverter identifies a device type of the connected device by using a port. When the identification succeeds, a communication connection with the connected device is established, and a function of the connected device is enabled. When the identification fails, an abnormality report is generated and sent.

In some examples, the inverter includes 1, 2, and 3 up to N ports. The number of ports is not limited, their appearance is not limited, their pins are not limited, the number of connection lines is not limited, the communication mode is not limited, and the communication protocol is not limited.

For example, when an LED display lamp that is originally connected to a port 1 of the inverter is removed, the inverter identifies the removed device, breaks a communication connection from the LED display lamp, and disables a function of the LED display lamp. When an LCD display is connected to a port N of the inverter, the inverter automatically identifies that a new device is connected to the port N, and starts to identify whether the connected device is matched. When correctly identifying the LCD display, the inverter automatically enables a display function of the LCD display, thereby achieving effects of perception-free removal and perception-free plug-and-play of a selected device.

For another example, a cloud data stick originally connected to the port 1 of the inverter is removed, and a smart junction box is connected to the same port instead. In this case, the system automatically identifies that the cloud data stick is disconnected, disables a communication function of the data stick, identifies the smart junction box, reads parameter data of the smart junction box, and sends a control instruction to the smart junction box based on a user setting.

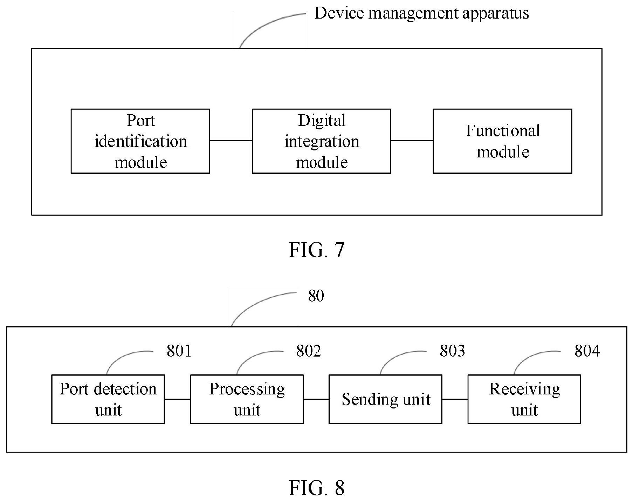

In a design, this application provides a device management apparatus, configured to perform the foregoing device management method. The device management apparatus is integrated into an inverter. As shown in FIG. 7, the device management apparatus includes a port identification module, a digital integration module, and a functional module.

The port identification module is configured to detect a state of a port, and determine whether a device is connected or removed. The port identification module is further configured to identify a device type of the connected device. The digital integration module is configured to: establish a communication connection between the connected device and the inverter, and during data exchange with the connected device, package and send real-time running data and a control instruction in an integrated manner. The functional module is configured to control enabling or disabling of a function code field corresponding to the device, so as to enable a corresponding function when the device is connected, and disable a corresponding function when the device is removed.

The solutions provided in the embodiments of this application are mainly described above from a perspective of a method. To implement the foregoing functions, corresponding hardware structures and/or software modules for performing the functions are included. A person skilled in the art should be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In the embodiments of this application, the user equipment may be divided into functional modules based on the foregoing method examples, for example, each functional module may be obtained through division for each corresponding function, or two or more functions may be integrated into one processing module. The foregoing integrated module may be implemented in a form of hardware, or may be implemented in a form of a software functional module. Optionally, division into the modules in the embodiments of this application is an example, and is merely logical function division. During actual implementation, there may be another division manner.

FIG. 8 is a schematic diagram of a structure of a device management apparatus according to an embodiment of this application. The device management apparatus is configured to perform the foregoing device management method. As shown in FIG. 8, the device management apparatus 80 includes a port detection unit 801 and a processing unit 802.

The port detection unit 801 is configured to: when it is detected that a device is connected to a port, identify a device type of the connected device.

The processing unit 802 is configured to: when the identification of the device type of the connected device succeeds, establish a communication connection with the connected device.

The processing unit 802 is further configured to activate a function corresponding to the device type of the connected device.

Optionally, as shown in FIG. 8, in the device management apparatus 80 provided in this embodiment of this application, the port detection unit 801 is further configured to: when it is detected that a device is removed from the port, determine the removed device. The processing unit 802 is further configured to: break a communication connection from the removed device, and disable a function corresponding to the removed device.

Optionally, as shown in FIG. 8, the device management apparatus 80 provided in this embodiment of this application further includes a sending unit 803 and a receiving unit 804.

The sending unit 803 is configured to send a plurality of test signals to the connected device, where the plurality of test signals include test signals corresponding to different device types.

The receiving unit 804 is configured to: receive a response message returned by the connected device, and determine the device type of the connected device based on a test signal corresponding to the response message.

Optionally, as shown in FIG. 8, in the device management apparatus 80 provided in this embodiment of this application, the processing unit 802 is further configured to: when no response message is received within a preset time period after the plurality of test signals are sent, generate and send an abnormality report, where the abnormality report includes the port to which the connected device is connected.

Optionally, as shown in FIG. 8, in the device management apparatus 80 provided in this embodiment of this application, the sending unit 803 is further configured to send a type request message to the connected device.

The receiving unit 804 is further configured to receive a device type returned by the connected device in response to the type request message.

Optionally, as shown in FIG. 8, in the device management apparatus 80 provided in this embodiment of this application, the receiving unit 804 is further configured to receive a target message sent by a first device, where the target message includes running data and/or a control instruction.

The sending unit 803 is further configured to forward the target message to a second device, where the first device and the second device are separately connected to the inverter.

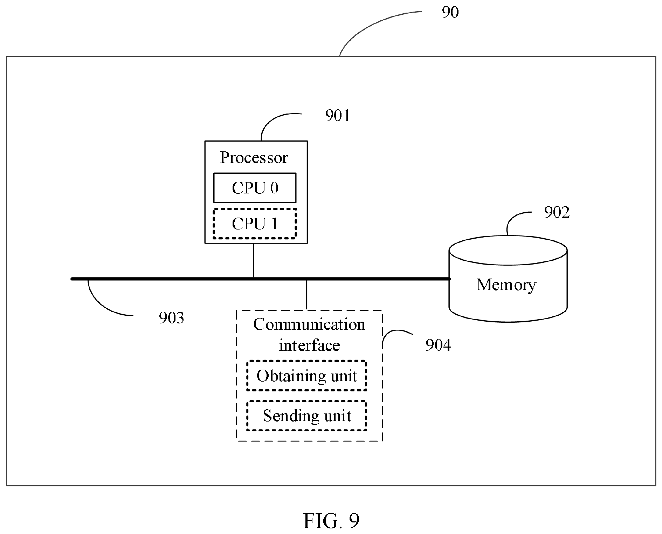

When the functions of the foregoing integrated modules are implemented in a form of hardware, an embodiment of this application provides a schematic diagram of a possible structure of an inverter. The inverter is configured to perform the device management method that is performed by the device management apparatus in the foregoing embodiment. As shown in FIG. 9, the inverter 90 includes a processor 901, a memory 902, and a bus 903. The processor 901 may be connected to the memory 902 by using the bus 903.

The processor 901 is a control center of the inverter, and may be a processor, or may be a general term of a plurality of processing elements. For example, the processor 901 may be a general-purpose central processing unit (central processing unit, CPU), another general-purpose processor, or the like. The general-purpose processor may be a microprocessor, any conventional processor, or the like.

In an embodiment, the processor 901 may include one or more CPUs, such as a CPU 0 and a CPU 1 shown in FIG. 9.

The memory 902 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a magnetic disk storage medium or another magnetic storage device, or any other medium capable of carrying or storing desired program code in a form of instructions or data structures and capable of being accessed by a computer, but is not limited thereto.

In a possible implementation, the memory 902 may exist independently of the processor 901, and the memory 902 may be connected to the processor 901 by using the bus 903, to store instructions or program code. When invoking and executing the instructions or the program code stored in the memory 902, the processor 901 can implement the device management method provided in the embodiments of this application.

In another possible implementation, the memory 902 may alternatively be integrated with the processor 901.

The bus 903 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used for representation in FIG. 9, but this does not indicate that there is only one bus or one type of bus.

It should be noted that the structure shown in FIG. 9 does not constitute a limitation on the inverter 90. In addition to the components shown in FIG. 9, the inverter 90 may include more or fewer components than those shown in FIG. 9, combine some components, or have different component arrangements.

In an example, with reference to FIG. 8, functions implemented by the port detection unit 801, the processing unit 802, the sending unit 803, and the receiving unit 804 in the device management apparatus 80 are the same as the functions of the processor 901 in FIG. 9.

Optionally, as shown in FIG. 9, the inverter provided in this embodiment of this application may further include a communication interface 904.

The communication interface 904 is configured to connect to another device by using a communication network. The communication network may be an Ethernet, a radio access network, a wireless local area network (wireless local area networks, WLAN), or the like. The communication interface 904 may include an obtaining unit configured to receive data and a sending unit configured to send data.

In a design, in the inverter provided in this embodiment of this application, the communication interface may alternatively be integrated into a processor.

According to the foregoing descriptions of the implementations, a person skilled in the art may clearly understand that, for convenience and brevity of description, division of the foregoing functional units is merely used as an example for description. In actual application, the foregoing functions may be allocated to different functional units according to a requirement, that is, an internal structure of the apparatus is divided into different functional units, to complete all or some of the functions described above. For specific working processes of the foregoing system, apparatus, and unit, refer to corresponding processes in the foregoing method embodiments. Details are not described herein again.

An embodiment of this application further provides a computer-readable storage medium. The computer-readable storage medium stores instructions. When a computer executes the instructions, the computer performs the steps in the method procedure shown in the foregoing method embodiments.

An embodiment of this application provides a computer program product including instructions. When the instructions are run on a computer, the computer is enabled to perform the device management method in the foregoing method embodiments.

The computer-readable storage medium may be, for example but not limited to, an electronic, magnetic, optical, electromagnetic, infrared, or semiconductor system, apparatus, or component, or any combination thereof. A more specific example (a non-exhaustive list) of the computer-readable storage medium includes: an electrical connection with one or more wires, a portable computer disk, and a hard disk. The computer-readable storage medium is a random access memory (Random Access Memory, RAM), a read-only memory (Read-Only Memory, ROM), an erasable programmable read-only memory (Erasable Programmable Read Only Memory, EPROM), a register, a hard disk, an optical fiber, a compact disc read-only memory (Compact Disc Read-Only Memory, CD-ROM), an optical storage device, a magnetic storage device, any proper combination thereof, or any other form of computer-readable storage medium in the art. An example storage medium is coupled to the processor, to enable the processor to read information from and write information to the storage medium. Certainly, the storage medium may alternatively be an integral part of the processor. The processor and the storage medium may be located in an application-specific integrated circuit (Application Specific Integrated Circuits, ASIC). In this embodiment of this application, the computer-readable storage medium may be any tangible medium that includes or stores a program, and the program may be used by or in combination with an instruction execution system, apparatus, or component.

The apparatus, the device, the computer-readable storage medium, and the computer program product provided in the embodiments of this application may be applied to the foregoing method. Therefore, for a technical effect that can be achieved by the apparatus, the device, the computer-readable storage medium, and the computer program product, refer to the foregoing method embodiments. Details are not described herein again in this embodiment of this application.

The foregoing descriptions are merely specific implementations of this application, but are not intended to limit the protection scope of this application. Any variation or replacement made within the technical scope disclosed in this application shall fall within the protection scope of this application. Therefore, the protection scope of this application shall be subject to the protection scope of the claims.

## Claims

1. A device management method, wherein the method comprises:
when it is detected that a device is connected to a port, identifying a device type of the connected device;
when the identification of the device type of the connected device succeeds, establishing a communication connection with the connected device; and
activating a function corresponding to the device type of the connected device.

2. The device management method according to claim 1, wherein the method further comprises:
when it is detected that a device is removed from the port, determining the removed device; and
breaking a communication connection from the removed device, and disabling a function corresponding to the removed device.

3. The device management method according to claim 1, wherein the identifying a device type of the connected device comprises:
sending a plurality of test signals to the connected device, wherein the plurality of test signals comprise test signals corresponding to different device types; and
receiving a response message returned by the connected device, and determining the device type of the connected device based on a test signal corresponding to the response message.

4. The device management method according to claim 3, wherein the method further comprises:
when no response message is received within a preset time period after the plurality of test signals are sent, generating and sending an abnormality report, wherein the abnormality report comprises the port to which the connected device is connected.

5. The device management method according to claim 1, wherein the identifying a device type of the connected device comprises:
sending a type request message to the connected device, and receiving a device type returned by the connected device in response to the type request message.

6. The device management method according to any one of claims 1 to 5, wherein the method further comprises:
receiving a target message sent by a first device, wherein the target message comprises running data and/or a control instruction; and
forwarding the target message to a second device, wherein the first device and the second device are separately connected to an inverter.

7. The device management method according to any one of claims 1 to 5, wherein a message between an inverter and the connected device is encrypted based on a global digital encryption algorithm.

8. A device management apparatus, comprising a port detection unit and a processing unit, wherein
the port detection unit is configured to: when it is detected that a device is connected to a port, identify a device type of the connected device;
the processing unit is configured to: when the identification of the device type of the connected device succeeds, establish a communication connection with the connected device; and
the processing unit is further configured to activate a function corresponding to the device type of the connected device.

9. An inverter, comprising a memory and a processor, wherein
the memory is coupled to the processor;
the memory is configured to store computer program code, wherein the computer program code comprises computer instructions; and
when the processor executes the computer instructions, the inverter performs the device management method according to any one of claims 1 to 7.

10. A computer-readable storage medium, wherein the computer-readable storage medium stores instructions, and when the instructions are run on an inverter, the inverter is enabled to perform the device management method according to any one of claims 1 to 7.
